# EUROPEAN PATENT APPLICATION

(11) **EP 4 422 105 A1**
(43) Date of publication of application: **28.08.2024**
(21) Application number: 22882716.8
(22) Date of filing: 12.10.2022
(51) Int. Cl.: H04L 5/00

(54) **DATA DISCARDING METHOD AND APPARATUS, TERMINAL, AND NETWORK SIDE DEVICE**

(30) Priority: 19.10.2021 CN 202111216504
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Conti, Marco
(86) International application number: PCT/CN2022/124881
(87) International publication number: WO 2023/066106

(57) **Abstract**

This application discloses a data drop method and apparatus, a terminal, and a network-side device, and pertains to the field of communication technologies. The method in embodiments of this application includes: dropping, by a terminal, first data in a case that the first data meets a first preset condition or that a first indication is received and the first data meets a second preset condition; where the first data includes a first data packet or a first group.

## Description

### CROSS-REFERENCE TO RELATED APPLICATIONS

This application claims priority to Chinese Patent Application No. 202111216504.3, filed in China on October 19, 2021, which is incorporated herein by reference in its entirety.

### TECHNICAL FIELD

This application pertains to the field of communication technologies, and specifically relates to a data drop method and apparatus, a terminal, and a network-side device.

### BACKGROUND

Currently, to prevent congestion in the send buffer, the packet data convergence protocol (Packet Data Convergence Protocol, PDCP) layer drops data based on a data radio bearer (Data Radio Bearer, DRB) drop timer. Specifically, when a service data unit (Service Data Unit, SDU) delivered from an upper layer is received, a sending-side PDCP entity starts a drop timer associated with this PDCP SDU and drops the SDU after the drop timer expires.

However, drop timers for PDCP SDUs are independent and have no relation to one another. For certain services with strong correlations between different data packets, the existing design of independent data packet dropping may lead to some ineffective data transmission, thus wasting system resources or causing increased latency for some data.

### SUMMARY

Embodiments of this application provide a data drop method and apparatus, a terminal, and a network-side device, which can solve the problem of system resource waste or increased data delay caused by the existing data drop schemes.

A first aspect provides a data drop method, including:
dropping, by a terminal, first data in a case that the first data meets a first preset condition or that a first indication is received and the first data meets a second preset condition; where
the first data includes a first data packet or a first group.

A second aspect of this application provides a data drop apparatus, including:
a processing module, configured to drop first data in a case that the first data meets a first preset condition or that a first indication is received and the first data meets a second preset condition; where
the first data includes a first data packet or a first group.

A third aspect provides a data drop method, including:
sending, by a network-side device, a first indication, where the first indication is used for a terminal to determine whether to drop first data in a case that the first data meets a second preset condition.

A fourth aspect provides a data drop apparatus, including:
a sending module, configured to send a first indication, where the first indication is used for the terminal to determine whether to drop first data in a case that the first data meets a second preset condition.

According to a fifth aspect, a terminal is provided. The terminal includes a processor, a memory, and a program or instructions stored in the memory and capable of running on the processor, and when the program or instructions are executed by the processor, the steps of the method according to the first aspect are implemented.

A sixth aspect provides a terminal, including a processor and a communication interface. The processor is configured to drop first data in a case that the first data meets a first preset condition or that a first indication is received and the first data meets a second preset condition; where
the first data includes a first data packet or a first group.

According to a seventh aspect, a network-side device is provided. The network-side device includes a processor, a memory, and a program or instructions stored in the memory and capable of running on the processor. When the program or instructions are executed by the processor, the steps of the method according to the third aspect are implemented.

According to an eighth aspect, a network-side device is provided, including a processor and a communication interface. The communication interface is configured to send a first indication, where the first indication is used for the terminal to determine whether to drop first data in a case that the first data meets a second preset condition.

According to a ninth aspect, a readable storage medium is provided, where the readable storage medium stores a program or instructions, and when the program or instructions are executed by a processor, the steps of the method according to the first aspect are implemented, or the steps of the method according to the third aspect are implemented.

According to a tenth aspect, a chip is provided. The chip includes a processor and a communication interface, the communication interface is coupled to the processor, and the processor is configured to run a program or instructions to implement the method according to the first aspect or the method according to the third aspect.

According to an eleventh aspect, a computer program/program product is provided. The computer program/program product is stored in a non-transient storage medium, and the computer program/program product is executed by at least one processor to implement the steps of the method according to the first aspect or the method according to the third aspect.

According to a twelfth aspect, a communications device is provided and configured to implement the steps of the method according to the first aspect or the method according to the third aspect.

In the embodiments of this application, a terminal drops first data in a case that the first data meets a first preset condition. In addition, a second preset condition is lower compared to the first preset condition and requires the combination with a first indication. Accordingly, for the terminal to drop the first data, the terminal needs to receive the first indication and the first data needs to meet the second preset condition. In this way, dropping the first data based on the first preset condition or based on the first indication and the second preset condition can reduce ineffective data transmission, improve system resource utilization, and certainly, reduce data transmission delay.

### BRIEF DESCRIPTION OF DRAWINGS

FIG. 1 is a block diagram of a wireless communications system;
FIG. 2 is a first schematic flowchart of a data drop method according to an embodiment of this application;
FIG. 3 is a second schematic flowchart of a data drop method according to an embodiment of this application;
FIG. 4 is a structural diagram of an apparatus corresponding to FIG. 2;
FIG. 5 is a structural diagram of an apparatus corresponding to FIG. 3;
FIG. 6 is a structural diagram of a communications device according to an embodiment of this application;
FIG. 7 is a structural diagram of a terminal according to an embodiment of this application; and
FIG. 8 is a structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type and do not limit the quantity of objects. For example, there may be one or a plurality of first objects. In addition, "and/or" in the specification and claims represents at least one of connected objects, and the character "/" generally indicates that the contextually associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

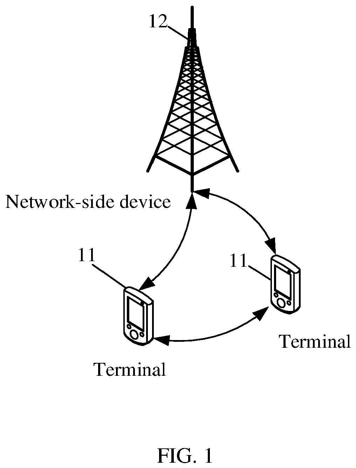

FIG. 1 is a block diagram of a wireless communications system to which embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smart watch, a wrist band, earphones, glasses, or the like. It should be noted that the terminal 11 is not limited to any specific type in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a wireless local area network (Wireless Local Area Networks, WLAN) access point, a wireless fidelity (Wireless Fidelity, WiFi) node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

The following describes in detail the data drop method provided in the embodiments of this application through some embodiments and application scenarios thereof with reference to the accompanying drawings.

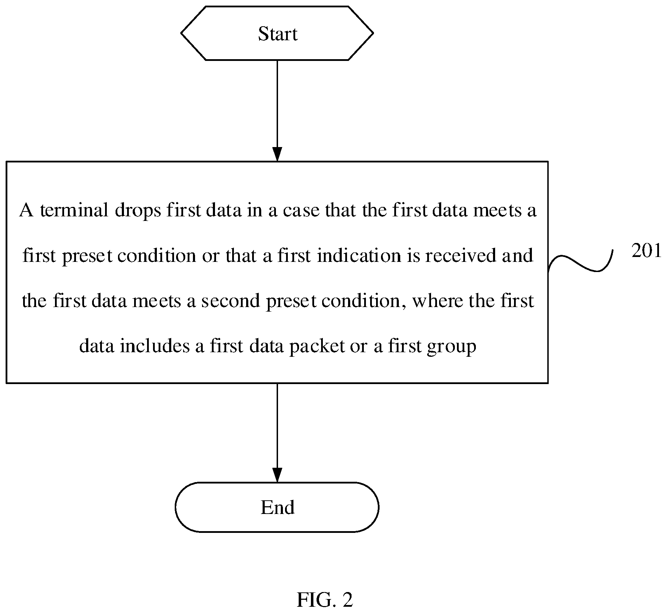

As shown in FIG. 2, an embodiment of this application provides a data drop method, including the following step.

Step 201. A terminal drops first data in a case that the first data meets a first preset condition or that a first indication is received and the first data meets a second preset condition.

The first data includes a first data packet or a first group.

The first preset condition and the second preset condition are pre-set data drop conditions. Thus, the terminal drops the first data in a case that the first data meets the first preset condition. In addition, the second preset condition is lower compared to the first preset condition and requires the combination with the first indication. Accordingly, for the terminal to drop the first data, the terminal needs to receive the first indication and the first data needs to meet the second preset condition. In this way, dropping the first data based on the first preset condition or based on the first indication and the second preset condition can reduce ineffective data transmission, improve system resource utilization, and certainly, reduce data transmission delay.

It should be known that in this embodiment, the first and second preset conditions can be set to consider the relevance of other data to the first data, in order to timely drop the first data that is not interdependent with other data.

Optionally, the first preset condition includes at least one of the following:
second data has been successfully processed;
the second data has been processed but the processing failed;
the second data has been dropped;
the processing of the second data does not require the first data;
the processing of the second data is completed based on the first data;
a fourth data packet or fourth group is generated;
the fourth data packet or fourth group delivered from a target layer is received;
transmission of the fourth data packet or fourth group is initialized;
transmission of the fourth data packet or fourth group begins;
a preset timer corresponding to the first data expires; and
the first data has been successfully transmitted; where
the fourth data packet is a data packet different from the first data packet or is a data packet different from a data packet in the first group; and
the fourth group is a data group different from the first group or is a data group different from a group containing the first data packet.

That the processing of the second data does not require the first data can mean that the first data is not required at the current time or within a first preset duration including the current time (that is, temporarily). That the processing of the second data does not require the first data can be understood as the processing of the second data does not depend on (depend or based on) the first data. The second data includes a second data packet and/or a second group, and the second data further includes a third data packet and/or a third group.

In the embodiments of this application, the "association" or "dependency" relationship is described as follows.

In some embodiments, among data associated with the first data and the first data itself, a first operation of one depends on the other. The first operation includes at least one of the following: transmission, decoding, demodulation, reception, display, and integrity verification. For example, one can be the first data packet, a data packet in the first group, the first group, or the group containing the first data packet, and the other can be the second data packet, a data packet in the second group, the second group, or the group containing the second data packet.

In this embodiment, corresponding to the first preset condition, optionally, the second data includes the second data packet or the second group.

The second data packet includes at least one of the following:
a data packet associated with the first data packet;
a data packet associated with a group containing the first data packet;
a data packet associated with the first group; and
a data packet in a same group as the first data packet; or
the second group includes at least one of the following:
   a group associated with the first data packet;
   a group associated with the group containing the first data packet; and
   a group associated with the first group.

Optionally, the second data includes a third data packet or a third group, where
the third data packet is some or all of data packets corresponding to the preset timer; and
the third group is some or all of groups corresponding to the preset timer.

That is, for the second data that includes the second data packet or the second group, and/or the second data that includes the third data packet or the third group, the terminal drops the first data in a case that at least one of the following occurs: the second data has been successfully processed, the second data has been processed but the processing failed, the second data has been dropped, the processing of the second data does not require the first data, and the processing of the second data is completed based on the first data.

For example, the terminal drops the first data in a case that at least one of the following occurs: the data packet associated with the first data packet has been successfully processed, the data packet associated with the first data packet has been processed but the processing failed, the data packet associated with the first data packet has been dropped, processing of the data packet associated with the first data packet does not require the first data, and processing of the data packet associated with the first data packet is completed based on the first data; the terminal drops the first data in a case that the data packet associated with the group containing the first data packet has been successfully processed, the data packet associated with the group containing the first data packet has been processed but the processing failed, the data packet associated with the group containing the first data packet has been dropped, processing of the data packet associated with the group containing the first data packet does not require the first data, and processing of the data packet associated with the group containing the first data packet is completed based on the first data; the terminal drops the first data in a case that at least one of the following occurs: the data packet associated with the first group has been successfully processed, the data packet associated with the first group has been processed but the processing failed, the data packet associated with the first group has been dropped, processing of the data packet associated with the first group does not require the first data, and processing of the data packet associated with the first group is completed based on the first data; the terminal drops the first data in a case that at least one of the following occurs: the data packet in a same group as the first data packet has been successfully processed, the data packet in a same group as the first data packet has been processed but the processing failed, the data packet in a same group as the first data packet has been dropped, processing of the data packet in a same group as the first data packet does not require the first data, and processing of the data packet in a same group as the first data packet is completed based on the first data; the terminal drops the first data in a case that at least one of the following occurs: the group associated with the first data packet has been successfully processed, the group associated with the first data packet has been processed but the processing failed, the group associated with the first data packet has been dropped, processing of the group associated with the first data packet does not require the first data, and processing of the group associated with the first data packet is completed based on the first data; the terminal drops the first data in a case that at least one of the following occurs: the group associated with the group containing the first data packet has been successfully processed, the group associated with the group containing the first data packet has been processed but the processing failed, the group associated with the group containing the first data packet has been dropped, processing of the group associated with the group containing the first data packet does not require the first data, and processing of the group associated with the group containing the first data packet is completed based on the first data; the terminal drops the first data in a case that at least one of the following occurs: the group associated with the first group has been successfully processed, the group associated with the first group has been processed but the processing failed, the group associated with the first group has been dropped, processing of the group associated with the first group does not require the first data, and processing of the group associated with the first group is completed based on the first data; the terminal drops the first data in a case that at least one of the following occurs: some or all of the data packets corresponding to the preset timer have been successfully processed, some or all of the data packets corresponding to the preset timer have been processed but the processing failed, some or all of the data packets corresponding to the preset timer have been dropped, processing of some or all of the data packets corresponding to the preset timer does not require the first data, and processing of some or all of the data packets corresponding to the preset timer is completed based on the first data; and the terminal drops the first data in a case that at least one of the following occurs: some or all of the groups corresponding to the preset timer have been successfully processed, some or all of the groups corresponding to the preset timer have been processed but the processing failed, some or all of the groups corresponding to the preset timer have been dropped, processing of some or all of the groups corresponding to the preset timer does not require the first data, and processing of some or all of the groups corresponding to the preset timer is completed based on the first data.

Additionally, in this embodiment, the target layer in the first preset condition is an upper layer, including at least one of the following: application layer, Internet protocol (Internet Protocol, IP) layer, Radio Resource Control (Radio Resource Control, RRC) layer, service data adaptation protocol (Service Data Adaptaion Protocol, SDAP) layer, packet data convergence protocol (Packet Data Convergence Protocol, PDCP) layer, radio link control (Radio Link Control, RLC) layer, media access control (Media Access Control, MAC) layer, physical (Physical, PHY) layer. Data of the fourth data packet or fourth group can be understood as new data relative to the first data. The preset timer is configured to determine whether the first data expires and drop the first data after the timeout. the activation (start) time of the preset timer is specified.

Therefore, in a case that the fourth data packet or fourth group is generated (for example, a PDCP SDU packet in a different group from the first data packet is generated), the terminal drops the first data; in a case that the fourth data packet or fourth group delivered from at least one of the application layer, IP layer, RRC layer, SDAP layer, PDCP layer, RLC layer, MAC layer, and PHY layer is received, the terminal drops the first data; in a case that transmission of the fourth data packet or fourth group is initialized, the terminal drops the first data; in a case that transmission of the fourth data packet or fourth group begins, the terminal drops the first data; in a case that the preset timer corresponding to the first data expires, the terminal drops the first data; and in a case that the first data has been successfully transmitted, the terminal drops the first data.

Optionally, the fourth data packet or fourth group includes at least one of the following:
a data packet in a same group as the first data;
a data packet in a different group of the same type as the first data; and
a data packet in a different group of a different type than the first data.

Here, based on different classification criteria, types of groups include: I frame (or IDR frame) or P frame; or base layer or enhancement layer.

Furthermore, in this embodiment, optionally, the first indication is used to indicate at least one of the following:
the second data has been successfully processed;
the second data has been processed but the processing failed;
the second data has been dropped;
the processing of the second data does not require the first data;
the processing of the second data is completed based on the first data;
no second data has an association with the first data; and
in a case that the first data is in a preset scenario and/or meets the second preset condition, the first data is dropped.

Similar to the first preset condition, that the processing of the second data does not require the first data can mean that the first data is not required at the current time or within a first preset duration including the current time (that is, temporarily). That the processing of the second data does not require the first data can be understood as the processing of the second data does not depend on (depend or based on) the first data.

In this embodiment, corresponding to the second preset condition, optionally, the second data includes a second data packet or a second group.

The second data packet includes at least one of the following:
a data packet associated with the first data packet;
a data packet associated with a group containing the first data packet;
a data packet associated with the first group;
a data packet in a same group as the first data packet; or
the second group includes at least one of the following:
   a group associated with the first data packet;
   a group associated with the group containing the first data packet; and
   a group associated with the first group.

That is, the terminal drops the first data in a case that the first data meets the second preset condition and that for the second data that includes the second data packet or the second group, the first indication indicates that at least one of the following occurs: the second data has been successfully processed, the second data has been processed but the processing failed, the second data has been dropped, processing of the second data has been does not require the first data, and processing of the second data has been is completed based on the first data.

For example, the terminal drops the first data in a case that the first data meets the second preset condition and that at least one of the following occurs: the data packet associated with the first data packet has been successfully processed, the data packet associated with the first data packet has been processed but the processing failed, the data packet associated with the first data packet has been dropped, processing of the data packet associated with the first data packet does not require the first data, and processing of the data packet associated with the first data packet is completed based on the first data; the terminal drops the first data in a case that the first data meets the second preset condition and that at least one of the following occurs: the data packet associated with the group containing the first data packet has been successfully processed, the data packet associated with the group containing the first data packet has been processed but the processing failed, the data packet associated with the group containing the first data packet has been dropped, processing of the data packet associated with the group containing the first data packet does not require the first data, and processing of the data packet associated with the group containing the first data packet is completed based on the first data; the terminal drops the first data in a case that the first data meets the second preset condition and that at least one of the following occurs: the data packet associated with the first group has been successfully processed, the data packet associated with the first group has been processed but the processing failed, the data packet associated with the first group has been dropped, processing of the data packet associated with the first group does not require the first data, and processing of the data packet associated with the first group is completed based on the first data; the terminal drops the first data in a case that the first data meets the second preset condition and that at least one of the following occurs: the data packet in a same group as the first data packet has been successfully processed, the data packet in a same group as the first data packet has been processed but the processing failed, the data packet in a same group as the first data packet has been dropped, processing of the data packet in a same group as the first data packet does not require the first data, and processing of the data packet in a same group as the first data packet is completed based on the first data; the terminal drops the first data in a case that the first data meets the second preset condition and that at least one of the following occurs: the group associated with the first data packet has been successfully processed, the group associated with the first data packet has been processed but the processing failed, the group associated with the first data packet has been dropped, processing of the group associated with the first data packet does not require the first data, and processing of the group associated with the first data packet is completed based on the first data; the terminal drops the first data in a case that the first data meets the second preset condition and that at least one of the following occurs: the group associated with the group containing the first data packet has been successfully processed, the group associated with the group containing the first data packet has been processed but the processing failed, the group associated with the group containing the first data packet has been dropped, processing of the group associated with the group containing the first data packet does not require the first data, and processing of the group associated with the group containing the first data packet is completed based on the first data; and the terminal drops the first data in a case that the first data meets the second preset condition and that at least one of the following occurs: the group associated with the first group has been successfully processed, the group associated with the first group has been processed but the processing failed, the group associated with the first group has been dropped, processing of the group associated with the first group does not require the first data, and processing of the group associated with the first group is completed based on the first data.

Additionally, in this embodiment, for the second preset condition, under a condition that the first indication indicates that no second data has an association with the first data, the terminal drops the first data in a case that the first data meets the second preset condition. That no second data has an association with the first data can mean: there has always been no (corresponding to an initial fixed configuration) second data that has an association with the first data; there is currently no (corresponding to the current indication) second data that has an association with the first data, such as when a corresponding timer expires; there is temporarily no (that is, during the effective time of the indication or the running period of the preset timer) second data that has an association with the first data, such as when a corresponding timer stops (stop) or is suspended (suspend). That no second data has an association with the first data can also be understood as that no second data (data packet or group) is dependent on the first data.

In this embodiment, for the second preset condition, if the first indication indicates to drop the first data in a case that the first data is in a preset scenario and/or meets the second preset condition, the terminal drops the first data in a case that the first data meets the second preset condition. For example, the first indication indicates to drop the first data in a case that the first data is in a preset scenario, and in this case, the terminal, upon receiving the first indication, drops the first data if the first data is in that preset scenario and meets the second preset condition.

Certainly, in this embodiment, for the first data, if the terminal does not receive the first indication and the first data is in a preset scenario, the terminal drops the first data or not in a case that the first data meets the second preset condition, but the terminal drops the first data in a case that the first data meets the first preset condition.

Optionally, in this embodiment, the second preset condition includes at least one of the following:
the preset timer (first timer) corresponding to the first data expires;
the second timer corresponding to third data expires, the third data being associated with the first data;
the first data is a data unit in a first target class group;
the first data belongs to a first target class data packet;
the terminal receives the first indication configured by a network-side device and/or indicated by a target layer, the target layer including at least one of the following: application layer, IP layer, RRC layer, SDAP layer, PDCP layer, RLC layer, and MAC layer;
the first data has a priority lower than a preset first threshold;
the first data has been successfully transmitted; and
the terminal determines to drop the first data based on first target information, the first target information including at least one of the following: transmission resource for the terminal; memory of the terminal; a cache space of the terminal; capability of the terminal; carrier aggregation CA configured for the terminal; dual connectivity DC configured for the terminal; channel quality of the terminal; size of the first data; size of data in a to-be-transmitted data queue of the terminal; and delay of the terminal or the first data.

The second timer and the first timer are drop timers. The drop timer is used to control the dropping of data packets or groups. For example, when a drop timer corresponding to a data packet or group expires, the corresponding data packet or group can be dropped.

Optionally, the first data includes the first data packet, and the third data packet associated with the first data packet includes at least one of the following:
a data packet in a group containing the first data packet;
a data packet associated with the first data packet or with the group containing the first data packet;
a data packet in a group associated with the first data packet or with the group containing the first data packet;
a data packet corresponding to the preset timer; and
a data packet in a group corresponding to the first timer.

Optionally, in this embodiment, the preset scenario includes at least one of the following:
the third data is being transmitted; and
the third data has been successfully transmitted; where
the third data is associated with the first data.

In this preset scenario, optionally, the first data is a first data packet or a first group, and the third data is a fifth data packet. The fifth data packet includes at least one of the following:
at least some data packets in a group containing the first data packet;
at least some data packets associated with the first data packet or with the group containing the first data packet;
at least some data packets in a group associated with the first data packet or with the group containing the first data packet;
at least some data packets corresponding to a preset timer;
at least some data packets associated with a data packet corresponding to the preset timer;
at least some data packets in a group corresponding to the preset timer; and
a data packet in a group associated with the group corresponding to the preset timer.

In this preset scenario, optionally, the first data is a first data packet or a first group, and the third data is a fifth group. The fifth group includes at least one of the following:
a group containing the first data packet;
a group containing a data packet associated with the first data packet;
a group associated with the group containing the first data packet;
a group corresponding to the preset timer; and
a group associated with a group corresponding to the preset timer.

It should also be known that in this embodiment, that the second data has been successfully processed may include: part or all or associated part of the data has been successfully processed; that the second data has been processed but the processing failed may include: processing of part or all or associated part of the data failed; and that the second data has been dropped may include: part or all or associated part of the data has been dropped. Here, the part or associated part of the data may correspond to a preset proportion, that is, the part or associated part of the data is data corresponding to the preset proportion in the second data or the data associated with the first data.

Optionally, in this embodiment, the processing includes at least one of the following:
sending; receiving; delivering; demodulating; decoding; and displaying.

Delivering can also be understood as transferring, that is, inter-layer data transfer, that is, a current layer delivers data to other upper or lower layers. Sending or receiving can be understood as transmission.

It should be understood that in this embodiment, the first group, the second group, the third group, and the fourth group are data groups, which can be based on data packet grouping, each group containing a combination or collection of multiple data packets. Here, a group can also be referred to as a data set.

Optionally, in this embodiment, a start time of the preset timer includes at least one of the following:
a time at which the first data is generated;
a time at which the first data delivered from the target layer is received;
a time at which transmission of the first data is initialized;
a time at which transmission of the first data begins;
a time at which the first data meets the second preset condition;
a time at which the terminal gives up dropping the first data;
a time at which the first data is in a preset scenario;
a time at which the second data is successfully transmitted; and
a time at which a group containing the second data is successfully transmitted.

Optionally, timing duration of the preset timer is determined based on an air interface transmission delay budget requirement or latency requirement.

For example, if the air interface transmission delay budget (Packet Delay Budget, PDB) is required to be 5-10ms, and the timing duration is determined based on the PDB, then the timing duration of the preset timer needs to meet the PDB, such as configuring the timing duration to be 8 ms. Similarly, if the timing duration is determined based on latency (latency) requirements, then the configured timing duration needs to meet the latency requirements.

Optionally, in this embodiment, the preset timer stops in a case that the first data is successfully transmitted.

That is, in a case that the first data has been successfully transmitted, the preset timer corresponding to the first data will stop. That the first data has been successfully transmitted means that the first data packet or the first group has been successfully transmitted.

Optionally, in this embodiment, the first data or the second data includes at least one of the following:
a packet data convergence protocol (Packet Data Convergence Protocol, PDCP) service data unit (Service Data Unit, SDU);
a PDCP protocol data unit (Protocol Data Unit, PDU);
a radio link control (Radio Link Control, RLC) SDU;
a RLC PDU;
a media access control (Media Access Control, MAC) SDU;
a MAC PDU;
a physical layer data packet, such as a transmission block (transmission block);
a radio resource control (Radio Resource Control, RRC) layer data packet, such as an RRC message (message);
a service data adaptation protocol (Service Data Adaptation Protocol, SDAP) SDAP layer PDU;
an SDAP layer SDU;
an Internet Protocol (Internet Protocol, IP) data packet (package);
a data packet corresponding to a PDU session (session);
a data packet corresponding to a quality of service (Quality of Service, QoS) flow (flow); and
a data packet corresponding to a radio bearer.

Optionally, the group containing the first data packet or the second data packet or the third data packet, or the fourth group includes at least one of the following:
a combination or collection of multiple data packets;
a data packet or data packet collection of an upper layer, where the upper layer includes at least one of the following: application layer, IP layer, RRC layer, SDAP layer, PDCP layer, RLC layer, MAC layer, and physical PHY layer;
a data packet or data packet collection corresponding to a QoS flow;
an I frame, IDR frame, or I slice (slice) in a service;
a P frame or P slice in a service;
a B frame or B slice in a service;
an Fov frame in a service;
a non-Fov frame in a service;
a voice data packet or data packet collection in a service;
a video or image data packet or data packet collection in a service;
data packets or data packet collection of different priorities in a service;
a data packet or data packet collection corresponding to a base layer in a service; and
a data packet or data packet collection corresponding to an enhancement layer in a service.

Here, the service can be an extended reality (eXtended Reality, XR) service, or a configured grant (Configured Grant, CG) service. Certainly, different groups include different groups of the same type or different groups of different types.

In this embodiment, the terminal gives up dropping the first data in a case that the first data of the terminal meets the second preset condition and that the terminal is in a preset scenario and/or the first data meets a third preset condition.

Specifically, the first data meets the second preset condition, and the first data has not yet been successfully transmitted. In a case that the first data is in a preset scenario and/or meets third preset condition, the terminal gives up dropping the first data or does not drop the first data.

Optionally, the third preset condition includes at least one of the following:
a second indication configured by the network-side device is received; and
a second indication indicated by the target layer is received.

It is determined based on second target information that dropping of the first data needs to be given up. The second target information is used to indicate at least one of the following:
whether the terminal supports carrier aggregation (Carrier Aggregation, CA) or dual connectivity (Dual Connectivity, DC);
whether to configure or activate carrier aggregation CA or dual connectivity DC for the terminal;
a resource configured by the network-side device for the terminal, or a resource used for transmitting the first data;
a channel of the terminal, or a channel used for transmitting the first data;
a size of the first data, or a size of a PDU corresponding to the first data, or a size of a SDU corresponding to the first data, or a size of a buffer state report (Buffer State Report, BSR) corresponding to the first data, or a size of a scheduling request (Scheduling Request, SR) corresponding to the first data;
the number of data packets in a first target data queue of the terminal, where the first target data queue includes a queue of the first data or a queue of data to be transmitted;
a latency requirement of the terminal or the first data; and
a PDB requirement of the terminal or the first data.

The target layer includes at least one of the following: application layer, IP layer, RRC layer, SDAP layer, PDCP layer, RLC layer, MAC layer, and PHY physical layer.

Optionally, the second indication is used to indicate at least one of the following:
in a case that the first data meets the second preset condition, the first data is not dropped;
in a case that the first data meets the second preset condition and is in the preset scenario, a first data unit is not dropped;
in a case that the terminal is in the preset scenario, the first data is not dropped;
in a case that the first data unit meets the first preset condition, the first data is not dropped;
third data associated with the first data; and
the third data is associated with the first data.

Here, the first data unit includes the first data packet or the first group, and the third data includes any one of the following:
a data packet or group associated with the first data packet or with the group containing the first data packet;
a data packet or group associated with the first group; and
a data packet in a same group as the first data packet.

In this embodiment, the second data and the third data can be the same.

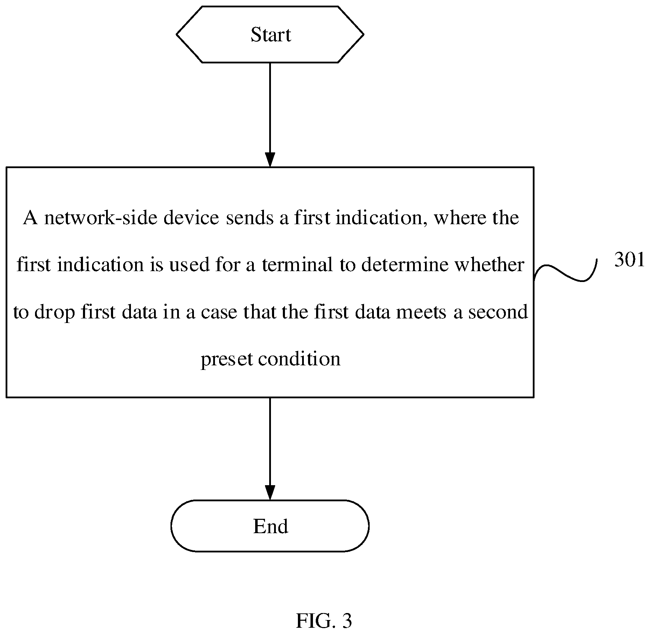

As shown in FIG. 3, a data drop method according to an embodiment of this application includes the following step.

Step 301. A network-side device sends a first indication, where the first indication is used for a terminal to determine whether to drop first data in a case that the first data meets a second preset condition.

The network-side device sends the first indication to the terminal so that the terminal, in combination with the second preset condition, drops the first data in a case that the first indication is received and the first data meets the second preset condition. This can reduce ineffective data transmission, improve system resource utilization, and certainly, reduce data transmission delay.

Optionally, the first indication is used to indicate at least one of the following:
second data has been successfully processed;
the second data has been processed but the processing failed;
the second data has been dropped;
the processing of the second data does not require the first data;
the processing of the second data is completed based on the first data;
no second data is associated with the first data; and
in a case that the first data is in a preset scenario and/or meets the second preset condition, the first data is dropped.

Optionally, the second data includes a second data packet or a second group.

The second data packet includes at least one of the following:
a data packet associated with a first data packet;
a data packet associated with a group containing the first data packet;
a data packet associated with a first group; and
a data packet in a same group as the first data packet; or
the second group includes at least one of the following:
   a group associated with the first data packet;
   a group associated with the group containing the first data packet; and
   a group associated with the first group.

Optionally, the processing includes at least one of the following:
sending; receiving; delivering; demodulating; decoding; and displaying.

Optionally, in this embodiment, the first data or the second data includes at least one of the following:
a packet data convergence protocol (Packet Data Convergence Protocol, PDCP) service data unit (Service Data Unit, SDU);
a PDCP protocol data unit (Protocol Data Unit, PDU);
a radio link control (Radio Link Control, RLC) SDU;
a RLC PDU;
a media access control (Media Access Control, MAC) SDU;
a MAC PDU;
a physical layer data packet, such as a transmission block (transmission block);
a radio resource control (Radio Resource Control, RRC) layer data packet, such as an RRC message (message);
a service data adaptation protocol (Service Data Adaptation Protocol, SDAP) SDAP layer PDU;
an SDAP layer SDU;
an Internet Protocol (Internet Protocol, IP) data packet (package);
a data packet corresponding to a PDU session (session);
a data packet corresponding to a quality of service (Quality of Service, QoS) flow (flow); and
a data packet corresponding to a radio bearer.

Optionally, the group containing the first data packet or the second data packet includes at least one of the following:
a combination or collection of multiple data packets;
a data packet or data packet collection of an upper layer, where the upper layer includes at least one of the following: application layer, IP layer, RRC layer, SDAP layer, PDCP layer, RLC layer, MAC layer, and physical PHY layer;
a data packet or data packet collection corresponding to a QoS flow;
an I frame, IDR frame, or I slice (slice) in a service;
a P frame or P slice in a service;
a B frame or B slice in a service;
an Fov frame in a service;
a non-Fov frame in a service;
a voice data packet or data packet collection in a service;
a video or image data packet or data packet collection in a service;
data packets or data packet collection of different priorities in a service;
a data packet or data packet collection corresponding to a base layer in a service; and
a data packet or data packet collection corresponding to an enhancement layer in a service.

Optionally, the method further includes:
sending, by the network-side device, a second indication.

The network-side device includes a base station device, a core-network device (such as an access and mobility management function (Access and Mobility Management Function, AMF), an application function (Application Function, AF), and a user-plane function (The User plane function, UPF)), a server end, and a data source side.

The second indication is used to indicate any one of the following:
in a case that the first data meets the second preset condition, the first data is not dropped;
in a case that the first data meets the second preset condition and is in the preset scenario, a first data unit is not dropped;
in a case that the terminal is in the preset scenario, the first data is not dropped;
in a case that the first data unit meets the first preset condition, the first data is not dropped;
third data associated with the first data; and
the third data is associated with the first data.

The first data unit includes the first data packet or the first group, and the third data includes any one of the following:
a data packet or group associated with the first data packet or with the group containing the first data packet;
a data packet or group associated with the first group; and
a data packet in a same group as the first data packet.

In this embodiment, the second data and the third data can be the same. It should be noted that the method is implemented in conjunction with the data drop method performed by the terminal mentioned above, and the implementation of the above method embodiment is applicable to this method and can achieve the same technical effect.

It should also be noted that the data drop method provided in this embodiment of the application can be executed by a data drop apparatus, or by a control module within the data drop apparatus configured to execute the data drop method. In this embodiment of the application, the data drop apparatus executing the data drop method is used as an example to describe the data drop method provided by the embodiment of this application.

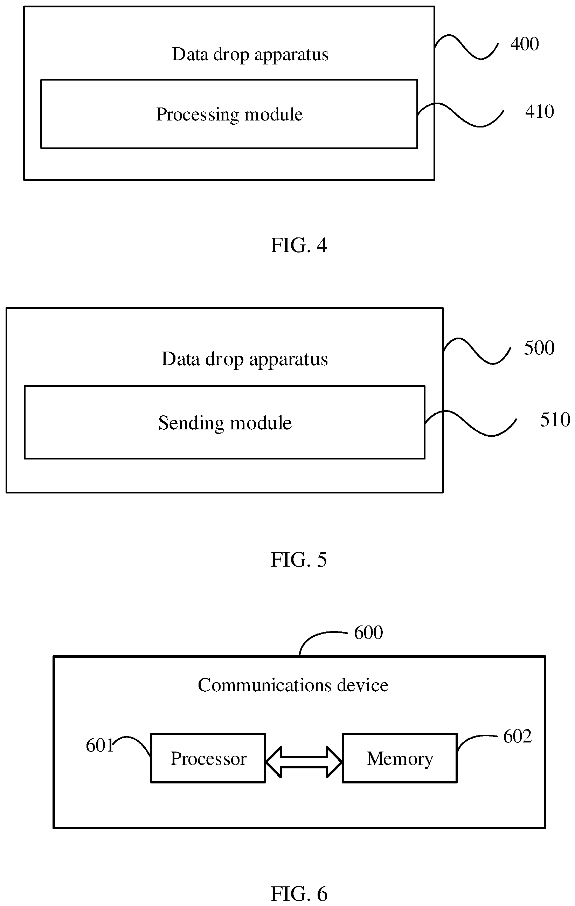

As shown in FIG. 4, a data drop apparatus 400 according to an embodiment of this application includes:
a processing module 410, configured to drop first data in a case that the first data meets a first preset condition or that a first indication is received and the first data meets a second preset condition.

The first data includes a first data packet or a first group.

The first preset condition and the second preset condition are pre-set data drop conditions. Thus, the terminal drops the first data in a case that the first data meets the first preset condition. In addition, the second preset condition is lower compared to the first preset condition and requires the combination with the first indication. Accordingly, for the terminal to drop the first data, the terminal needs to receive the first indication and the first data needs to meet the second preset condition. In this way, dropping the first data based on the first preset condition or based on the first indication and the second preset condition can reduce ineffective data transmission, improve system resource utilization, and certainly, reduce data transmission delay.

Optionally, the apparatus further includes a receiving module, configured to receive the first indication.

Optionally, the first preset condition includes at least one of the following:
second data has been successfully processed;
the second data has been processed but the processing failed;
the second data has been dropped;
the processing of the second data does not require the first data;
the processing of the second data is completed based on the first data;
a fourth data packet or fourth group is generated;
the fourth data packet or fourth group delivered from a target layer is received;
transmission of the fourth data packet or fourth group is initialized;
transmission of the fourth data packet or fourth group begins;
a preset timer corresponding to the first data expires; and
the first data has been successfully transmitted; where
the fourth data packet is a data packet different from the first data packet or is a data packet different from a data packet in the first group; and
the fourth group is a data group different from the first group or is a data group different from a group containing the first data packet.

Optionally, the first indication is used to indicate at least one of the following:
second data has been successfully processed;
the second data has been processed but the processing failed;
the second data has been dropped;
the processing of the second data does not require the first data;
the processing of the second data is completed based on the first data;
no second data is associated with the first data; and
in a case that the first data is in a preset scenario and/or meets the second preset condition, the first data is dropped.

Optionally, the second data includes a second data packet or a second group.

The second data packet includes at least one of the following:
a data packet associated with the first data packet;
a data packet associated with a group containing the first data packet;
a data packet associated with the first group; and
a data packet in a same group as the first data packet; or
the second group includes at least one of the following:
   a group associated with the first data packet;
   a group associated with the group containing the first data packet; and
   a group associated with the first group.

Optionally, the second data includes a third data packet or a third group, where
the third data packet is some or all of data packets corresponding to the preset timer; and
the third group is some or all of groups corresponding to the preset timer.

Optionally, the processing includes at least one of the following:
sending; receiving; delivering; demodulating; decoding; and displaying.

Optionally, the fourth data packet or fourth group includes at least one of the following:
a data packet in a same group as the first data;
a data packet in a different group of the same type as the first data; and
a data packet in a different group of a different type than the first data.

Optionally, a start time of the preset timer includes at least one of the following:
a time at which the first data is generated;
a time at which the first data delivered from the target layer is received;
a time at which transmission of the first data is initialized;
a time at which transmission of the first data begins;
a time at which the first data meets the second preset condition;
a time at which the terminal gives up dropping the first data;
a time at which the first data is in a preset scenario;
a time at which the second data is successfully transmitted; and
a time at which a group containing the second data is successfully transmitted.

Optionally, timing duration of the preset timer is determined based on an air interface transmission delay budget requirement or latency requirement.

Optionally, the preset timer stops in a case that the first data is successfully transmitted.

Optionally, the first data or the second data includes at least one of the following:
a packet data convergence protocol PDCP service data unit SDU;
a PDCP protocol data unit PDU;
a radio link control RLC SDU;
a RLC PDU; a media access control MAC SDU;
a MAC PDU;
a physical layer data packet;
a radio resource control RRC layer data packet;
a service data adaptation protocol SDAP layer PDU;
an SDAP layer SDU;
an Internet protocol IP data packet;
a data packet corresponding to a PDU session;
a data packet corresponding to a quality of service QoS flow; and
a data packet corresponding to a radio bearer.

Optionally, the group containing the first data packet or the second data packet or the third data packet, or the fourth group includes at least one of the following:
a combination or collection of multiple data packets;
a data packet or data packet collection of an upper layer, where the upper layer includes at least one of the following: application layer, IP layer, RRC layer, SDAP layer, PDCP layer, RLC layer, MAC layer, and physical PHY layer;
a data packet or data packet collection corresponding to a QoS flow;
an I frame, IDR frame, or I slice in a service;
a P frame or P slice in a service;
a B frame or B slice in a service;
an Fov frame in a service;
a non-Fov frame in a service;
a voice data packet or data packet collection in a service;
a video or image data packet or data packet collection in a service;
data packets or data packet collection of different priorities in a service;
a data packet or data packet collection corresponding to a base layer in a service; and
a data packet or data packet collection corresponding to an enhancement layer in a service.

The data drop apparatus in this embodiment of this application may be an apparatus or an apparatus or electronic device having an operating system, or may be a component, an integrated circuit, or a chip in a terminal. The apparatus or electronic device may be a mobile terminal or a non-mobile terminal. For example, the mobile terminal includes but is not limited to the types of the terminal 11 listed above, and the non-mobile terminal may be a server, a network attached storage (Network Attached Storage, NAS), a personal computer (Personal Computer, PC), a television (TeleVision, TV), a teller machine, a self-service machine, or the like, which is not specifically limited in the embodiments of this application.

The data drop apparatus provided in this embodiment of this application can implement the processes implemented in the method embodiment in FIG. 2. To avoid repetition, details are not described herein again.

As shown in FIG. 5, a data drop apparatus provided according to embodiments of this application includes:
a sending module 510, configured to send first indication, where the first indication is used to determine whether to drop first data in a case that the first data meets a second preset condition.

Optionally, the first indication is used to indicate at least one of the following:
second data has been successfully processed;
the second data has been processed but the processing failed;
the second data has been dropped;
the processing of the second data does not require the first data;
the processing of the second data is completed based on the first data;
no second data is associated with the first data; and
in a case that the first data is in a preset scenario and/or meets the second preset condition, the first data is dropped.

Optionally, the second data includes a second data packet or a second group.

The second data packet includes at least one of the following:
a data packet associated with a first data packet;
a data packet associated with a group containing the first data packet;
a data packet associated with a first group; and
a data packet in a same group as the first data packet; or
the second group includes at least one of the following:
   a group associated with the first data packet;
   a group associated with the group containing the first data packet; and
   a group associated with the first group.

Optionally, the processing includes at least one of the following:
sending; receiving; delivering; demodulating; decoding; and displaying.

Optionally, in this embodiment, the first data or the second data includes at least one of the following:
a packet data convergence protocol (Packet Data Convergence Protocol, PDCP) service data unit (Service Data Unit, SDU);
a PDCP protocol data unit (Protocol Data Unit, PDU);
a radio link control (Radio Link Control, RLC) SDU;
a RLC PDU;
a media access control (Media Access Control, MAC) SDU;
a MAC PDU;
a physical layer data packet, such as a transmission block (transmission block);
a radio resource control (Radio Resource Control, RRC) layer data packet, such as an RRC message (message);
a service data adaptation protocol (Service Data Adaptation Protocol, SDAP) SDAP layer PDU;
an SDAP layer SDU;
an Internet Protocol (Internet Protocol, IP) data packet (packet);
a data packet corresponding to a PDU session (session);
a data packet corresponding to a quality of service (Quality of Service, QoS) flow (flow); and
a data packet corresponding to a radio bearer.

Optionally, the group containing the first data packet or the second data packet includes at least one of the following:
a combination or collection of multiple data packets;
a data packet or data packet collection of an upper layer, where the upper layer includes at least one of the following: application layer, IP layer, RRC layer, SDAP layer, PDCP layer, RLC layer, MAC layer, and physical PHY layer;
a data packet or data packet collection corresponding to a QoS flow;
an I frame, IDR frame, or I slice (slice) in a service;
a P frame or P slice in a service;
a B frame or B slice in a service;
an Fov frame in a service;
a non-Fov frame in a service;
a voice data packet or data packet collection in a service;
a video or image data packet or data packet collection in a service;
data packets or data packet collection of different priorities in a service;
a data packet or data packet collection corresponding to a base layer in a service; and
a data packet or data packet collection corresponding to an enhancement layer in a service.

Optionally, the sending module is further configured to send a second indication.

The network-side device includes a base station device, a core-network device (such as AMF, AF, and UPF), a server end, and a data source side.

Optionally, the second indication is used to indicate at least one of the following:
in a case that the first data meets the second preset condition, the first data is not dropped;
in a case that the first data meets the second preset condition and is in the preset scenario, a first data unit is not dropped;
in a case that the terminal is in the preset scenario, the first data is not dropped;
in a case that the first data unit meets the first preset condition, the first data is not dropped;
third data associated with the first data; and
the third data is associated with the first data.

The first data unit includes the first data packet or the first group, and the third data includes any one of the following:
a data packet or group associated with the first data packet or with the group containing the first data packet;
a data packet or group associated with the first group; and
a data packet in a same group as the first data packet.

In this embodiment, the second data and the third data can be the same.

The data drop apparatus provided in this embodiment of this application can implement the processes implemented by the network-side device in the method embodiment in FIG. 3. To avoid repetition, details are not described herein again.

Optionally, as shown in FIG. 6, an embodiment of this application further provides a communications device including a processor 601, a memory 602, and a program or instructions stored in the memory 602 and capable of running on the processor 601. For example, in a case that the communications device 600 is a terminal, when the program or instructions are executed by the processor 601, the processes of the foregoing embodiment of the data drop method executed by the terminal are implemented, with the same technical effects achieved. In a case that the communications device 600 is a network-side device, when the program or instructions are executed by the processor 601, the processes of the foregoing data drop method embodiment executed by the network-side device are implemented, with the same technical effects achieved. To avoid repetition, details are not described herein again.

An embodiment of this application further provides a terminal, including a processor and a communication interface. The processor is configured for the terminal to drop first data in a case that the first data meets a first preset condition or that a first indication is received and the first data meets a second preset condition.

The first data includes a first data packet or a first group.

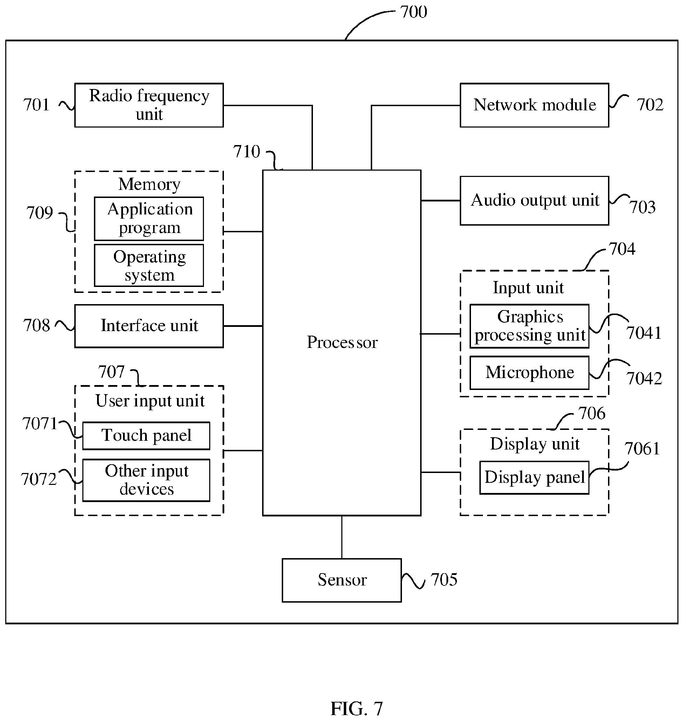

The communication interface is configured to receive the first indication. This terminal embodiment corresponds to the foregoing method embodiment on the terminal side. All processes and implementations in the foregoing method embodiment can be applicable to this terminal embodiment, with the same technical effects achieved. Specifically, FIG. 7 is a schematic diagram of a hardware structure of a terminal for implementing embodiments of this application.

The terminal 700 includes, but is not limited to, at least some of components such as a radio frequency unit 701, a network module 702, an audio output unit 703, an input unit 704, a sensor 705, a display unit 706, a user input unit 707, an interface unit 708, a memory 709, and a processor 710.

It can be understood by those skilled in the art that the terminal 700 may further include a power supply (for example, a battery) supplying power to the components. The power supply may be logically connected to the processor 710 via a power management system, so that functions such as charge management, discharge management, and power consumption management are implemented by using the power management system. The structure of the terminal shown in FIG. 7 does not constitute a limitation on the terminal. The terminal may include more or fewer components than illustrated in the figure, or combine some components, or have a different component arrangement. Details are not described herein.

It should be understood that in this embodiment of this application, the input unit 704 may include a graphics processing unit (Graphics Processing Unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include a display panel 7061. The display panel 7061 may be configured in a form of a liquid crystal display, an organic light-emitting diode display, or the like. The user input unit 707 includes a touch panel 7071 and other input devices 7072. The touch panel 7071 is also referred to as a touchscreen. The touch panel 7071 may include two parts: a touch detection apparatus and a touch controller. The other input devices 7072 may include but is not limited to a physical keyboard, a function button (such as a volume control button or a power button), a trackball, a mouse, and a joystick. Details are not described now.

In this embodiment of this application, the radio frequency unit 701 transmits downlink data received from a network-side device to the processor 710 for processing, and in addition, transmits uplink data to the network-side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may include a program or instruction storage area and a data storage area. The program or instruction storage area may store an operating system, an application program or instructions required by at least one function (for example, sound play function or image play function), and the like. In addition, the memory 709 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, at least one disk storage device, flash memory device, or other non-volatile solid-state storage devices.

The processor 710 may include one or more processing units. Optionally, an application processor and a modem processor may be integrated in the processor 710. The application processor primarily processes an operating system, user interfaces, application programs or instructions, and the like. The modem processor primarily processes radio communication, for example, being a baseband processor. It can be understood that the modem processor may alternatively be not integrated in the processor 710.

The processor 710 is configured to drop first data in a case that the first data meets a first preset condition or that a first indication is received and the first data meets a second preset condition.

The first data includes a first data packet or a first group.

The radio frequency unit 701 is configured to receive the first indication.

The first preset condition and the second preset condition are pre-set data drop conditions. Thus, the terminal drops the first data in a case that the first data meets the first preset condition. In addition, the second preset condition is lower compared to the first preset condition and requires the combination with the first indication. Accordingly, for the terminal to drop the first data, the terminal needs to receive the first indication and the first data needs to meet the second preset condition. In this way, dropping the first data based on the first preset condition or based on the first indication and the second preset condition can reduce ineffective data transmission, improve system resource utilization, and certainly, reduce data transmission delay.

An embodiment of this application further provides a network-side device, including a processor and a communication interface. The communication interface is configured to send a first indication, where the first indication is used for a terminal to determine whether to drop first data in a case that the first data meets a second preset condition. This network-side device embodiment corresponds to the foregoing network-side device method embodiment. All processes and implementations in the foregoing method embodiment can be applicable to this network-side device embodiment, with the same technical effects achieved.

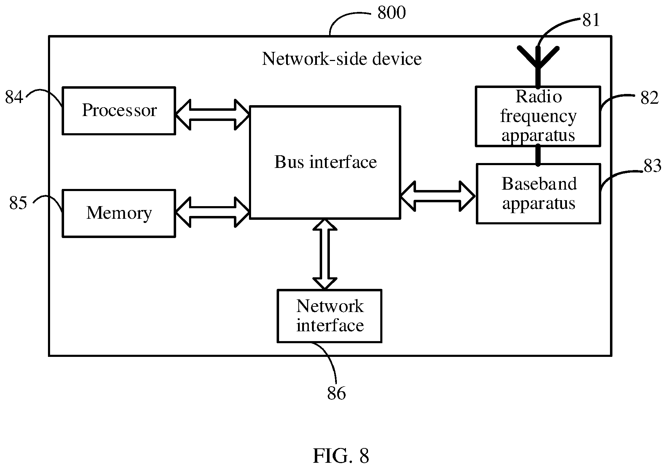

Specifically, an embodiment of this application further provides a network-side device. As shown in FIG. 8, the network-side device 800 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The frequency band processing apparatus may be located in the baseband apparatus 83. The method executed by the network-side device in the foregoing embodiments may be implemented in the baseband apparatus 83, and the baseband apparatus 83 includes a processor 84 and a memory 85.

The baseband apparatus 83 may include, for example, at least one baseband processing unit, where a plurality of chips are disposed on the baseband processing unit. As shown in FIG. 8, one of the chips is, for example, the processor 84, and connected to the memory 85, to invoke the program in the memory 85 to perform the operations of the network device shown in the foregoing method embodiment.

The baseband apparatus 83 may further include a network interface 86, configured to exchange information with the radio frequency apparatus 82, where the interface is, for example, a common public radio interface (Common Public Radio Interface, CPRI).

Specifically, the network-side device in this embodiment of this application further includes: instructions or a program stored in the memory 85 and capable of running on the processor 84. The processor 84 invokes the instructions or program in the memory 85 to execute the method executed by the modules shown in FIG. 5, with the same technical effects achieved. To avoid repetition, details are not described herein again.

An embodiment of this application further provides a readable storage medium, where the readable storage medium may be volatile or non-volatile. The readable storage medium stores a program or instructions, and when the program or instructions are executed by a processor, the processes of the data drop method executed by a terminal or the data drop method executed by a network-side device are implemented, with the same technical effects achieved. To avoid repetition, details are not described herein again.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement the processes of the embodiments of the data drop method executed a terminal or the data drop method executed by a network-side device, with the same technical effects achieved. To avoid repetition, details are not described herein again.

It should be understood that the chip mentioned in an embodiment of this application may also be referred to as a system-level chip, a system chip, a chip system, a system-on-chip, or the like.

An embodiment of this application further provides a computer program/computer program product, where the computer program/ program product is stored in a non-transient storage medium. The computer program product/program product is executed by at least one processor to implement the processes of the embodiments of the data drop method executed by a terminal or the data drop method executed by a network-side device, with the same technical effects achieved. To avoid repetition, details are not described herein again.

It should be noted that in this specification, the terms "comprise" and "include", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a... " does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred embodiment. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A data drop method, comprising:
dropping, by a terminal, first data in a case that the first data meets a first preset condition or that a first indication is received and the first data meets a second preset condition; wherein
the first data comprises a first data packet or a first group.

2. The method according to claim 1, wherein the first preset condition comprises at least one of the following:
second data has been successfully processed;
the second data has been processed but the processing failed;
the second data has been dropped;
the processing of the second data does not require the first data;
the processing of the second data is completed based on the first data;
a fourth data packet or fourth group is generated;
the fourth data packet or fourth group delivered from a target layer is received;
transmission of the fourth data packet or fourth group is initialized;
transmission of the fourth data packet or fourth group begins;
a preset timer corresponding to the first data expires; and
the first data has been successfully transmitted; wherein
the fourth data packet is a data packet different from the first data packet or is a data packet different from a data packet in the first group; and
the fourth group is a data group different from the first group or is a data group different from a group containing the first data packet.

3. The method according to claim 1, wherein the first indication is used to indicate at least one of the following:
second data has been successfully processed;
the second data has been processed but the processing failed;
the second data has been dropped;
the processing of the second data does not require the first data;
the processing of the second data is completed based on the first data;
no second data is associated with the first data; and
in a case that the first data is in a preset scenario and/or meets the second preset condition, the first data is dropped.

4. The method according to claim 2 or 3, wherein the second data comprises a second data packet or a second group, wherein
the second data packet comprises at least one of the following:
a data packet associated with the first data packet;
a data packet associated with a group containing the first data packet;
a data packet associated with the first group; and
a data packet in a same group as the first data packet; or
the second group comprises at least one of the following:
a group associated with the first data packet;
a group associated with the group containing the first data packet; and
a group associated with the first group.

5. The method according to claim 2, wherein the second data comprises a third data packet or a third group; wherein
the third data packet is some or all of data packets corresponding to the preset timer; and
the third group is some or all of groups corresponding to the preset timer.

6. The method according to claim 2 or 3, wherein the processing comprises at least one of the following:
sending; receiving; delivering; demodulating; decoding; and displaying.

7. The method according to claim 2, wherein the fourth data packet or fourth group comprises at least one of the following:
a data packet in a same group as the first data;
a data packet in a different group of the same type as the first data; and
a data packet in a different group of a different type than the first data.

8. The method according to claim 2, wherein a start time of the preset timer comprises at least one of the following:
a time at which the first data is generated;
a time at which the first data delivered from the target layer is received;
a time at which transmission of the first data is initialized;
a time at which transmission of the first data begins;
a time at which the first data meets the second preset condition;
a time at which the terminal gives up dropping the first data;
a time at which the first data is in a preset scenario;
a time at which the second data is successfully transmitted; and
a time at which a group containing the second data is successfully transmitted.

9. The method according to claim 2 or 8, wherein timing duration of the preset timer is determined based on an air interface transmission delay budget requirement or latency requirement.

10. The method according to claim 2 or 8, wherein the preset timer stops in a case that the first data is successfully transmitted.

11. The method according to claim 2 or 3, wherein the first data or the second data comprises at least one of the following:
a packet data convergence protocol PDCP service data unit SDU;
a PDCP protocol data unit PDU;
a radio link control RLC SDU;
a RLC PDU;
a media access control MAC SDU;
a MAC PDU;
a physical layer data packet;
a radio resource control RRC layer data packet;
a service data adaptation protocol SDAP layer PDU;
an SDAP layer SDU;
an Internet protocol IP data packet;
a data packet corresponding to a PDU session;
a data packet corresponding to a quality of service QoS flow; and
a data packet corresponding to a radio bearer.

12. The method according to claim 1, wherein the group containing the first data packet or the second data packet or the third data packet, or the fourth group comprises at least one of the following:
a combination or collection of multiple data packets;
a data packet or data packet collection of an upper layer, wherein the upper layer comprises at least one of the following: application layer, IP layer, RRC layer, SDAP layer, PDCP layer, RLC layer, MAC layer, and physical PHY layer;
a data packet or data packet collection corresponding to a QoS flow;
an I frame, IDR frame, or I slice in a service;
a P frame or P slice in a service;
a B frame or B slice in a service;
an Fov frame in a service;
a non-Fov frame in a service;
a voice data packet or data packet collection in a service;
a video or image data packet or data packet collection in a service;
data packets or data packet collection of different priorities in a service;
a data packet or data packet collection corresponding to a base layer in a service; and
a data packet or data packet collection corresponding to an enhancement layer in a service.

13. A data drop method, comprising:
sending, by a network-side device, a first indication, wherein the first indication is used for a terminal to determine whether to drop first data in a case that the first data meets a second preset condition.

14. The method according to claim 13, wherein the first indication is used to indicate at least one of the following:
second data has been successfully processed;
the second data has been processed but the processing failed;
the second data has been dropped;
the processing of the second data does not require the first data;
the processing of the second data is completed based on the first data;
no second data is associated with the first data; and
in a case that the first data is in a preset scenario and/or meets the second preset condition, the first data is dropped.

15. A data drop apparatus, comprising:
a processing module, configured to drop first data in a case that the first data meets a first preset condition or that a first indication is received and the first data meets a second preset condition; wherein
the first data comprises a first data packet or a first group.

16. The apparatus according to claim 15, wherein the first preset condition comprises at least one of the following:
second data has been successfully processed;
the second data has been processed but the processing failed;
the second data has been dropped;
the processing of the second data does not require the first data;
the processing of the second data is completed based on the first data;
a fourth data packet or fourth group is generated;
the fourth data packet or fourth group delivered from a target layer is received;
transmission of the fourth data packet or fourth group is initialized;
transmission of the fourth data packet or fourth group begins;
a preset timer corresponding to the first data expires; and
the first data has been successfully transmitted; wherein
the fourth data packet is a data packet different from the first data packet or is a data packet different from a data packet in the first group; and
the fourth group is a data group different from the first group or is a data group different from a group containing the first data packet.

17. The apparatus according to claim 15, wherein the first indication is used to indicate at least one of the following:
second data has been successfully processed;
the second data has been processed but the processing failed;
the second data has been dropped;
the processing of the second data does not require the first data;
the processing of the second data is completed based on the first data;
no second data is associated with the first data; and
in a case that the first data is in a preset scenario and/or meets the second preset condition, the first data is dropped.

18. The apparatus according to claim 16 or 17, wherein the second data comprises a second data packet or a second group, wherein
the second data packet comprises at least one of the following:
a data packet associated with the first data packet;
a data packet associated with a group containing the first data packet;
a data packet associated with the first group; and
a data packet in a same group as the first data packet; or
the second group comprises at least one of the following:
a group associated with the first data packet;
a group associated with the group containing the first data packet; and
a group associated with the first group.

19. The apparatus according to claim 16, wherein the second data comprises a third data packet or a third group; wherein
the third data packet is some or all of data packets corresponding to the preset timer; and
the third group is some or all of groups corresponding to the preset timer.

20. The apparatus according to claim 16 or 17, wherein the processing comprises at least one of the following:
sending; receiving; delivering; demodulating; decoding; and displaying.

21. The apparatus according to claim 16, wherein the fourth data packet or fourth group comprises at least one of the following:
a data packet in a same group as the first data;
a data packet in a different group of the same type as the first data; and
a data packet in a different group of a different type than the first data.

22. The apparatus according to claim 16, wherein a start time of the preset timer comprises at least one of the following:
a time at which the first data is generated;
a time at which the first data delivered from the target layer is received;
a time at which transmission of the first data is initialized;
a time at which transmission of the first data begins;
a time at which the first data meets the second preset condition;
a time at which the terminal gives up dropping the first data;
a time at which the first data is in a preset scenario;
a time at which the second data is successfully transmitted; and
a time at which a group containing the second data is successfully transmitted.

23. The apparatus according to claim 16 or 22, wherein timing duration of the preset timer is determined based on an air interface transmission delay budget requirement or latency requirement.

24. The apparatus according to claim 16 or 22, wherein the preset timer stops in a case that the first data is successfully transmitted.

25. The apparatus according to claim 16 or 17, wherein the first data or the second data comprises at least one of the following:
a packet data convergence protocol PDCP service data unit SDU;
a PDCP protocol data unit PDU;
a radio link control RLC SDU;
a RLC PDU;
a media access control MAC SDU;
a MAC PDU;
a physical layer data packet;
a radio resource control RRC layer data packet;
a service data adaptation protocol SDAP layer PDU;
an SDAP layer SDU;
an Internet protocol IP data packet;
a data packet corresponding to a PDU session;
a data packet corresponding to a quality of service QoS flow; and
a data packet corresponding to a radio bearer.

26. The apparatus according to claim 15, wherein the group containing the first data packet or the second data packet or the third data packet, or the fourth group comprises at least one of the following:
a combination or collection of multiple data packets;
a data packet or data packet collection of an upper layer, wherein the upper layer comprises at least one of the following: application layer, IP layer, RRC layer, SDAP layer, PDCP layer, RLC layer, MAC layer, and physical PHY layer;
a data packet or data packet collection corresponding to a QoS flow;
an I frame, IDR frame, or I slice in a service;
a P frame or P slice in a service;
a B frame or B slice in a service;
an Fov frame in a service;
a non-Fov frame in a service;
a voice data packet or data packet collection in a service;
a video or image data packet or data packet collection in a service;
data packets or data packet collection of different priorities in a service;
a data packet or data packet collection corresponding to a base layer in a service; and
a data packet or data packet collection corresponding to an enhancement layer in a service.

27. A data drop apparatus, comprising:
a sending module, configured to send a first indication, wherein the first indication is used for a terminal to determine whether to drop first data in a case that the first data meets a second preset condition.

28. The apparatus according to claim 27, wherein the first indication is used to indicate at least one of the following:
second data has been successfully processed;
the second data has been processed but the processing failed;
the second data has been dropped;
the processing of the second data does not require the first data;
the processing of the second data is completed based on the first data;
no second data is associated with the first data; and
in a case that the first data is in a preset scenario and/or meets the second preset condition, the first data is dropped.

29. A terminal, comprising a processor, a memory, and a program or instructions stored in the memory and capable of running on the processor, wherein when the program or instructions are executed by the processor, the steps of the data drop method according to any one of claims 1 to 12 are implemented.

30. A network-side device, comprising a processor, a memory, and a program or instructions stored in the memory and capable of running on the processor, wherein when the program or instructions are executed by the processor, the steps of the data drop method according to claim 13 or 14 are implemented.

31. A readable storage medium, wherein the readable storage medium stores a program or instructions, and when the program or instructions are executed by the processor, the steps of the data drop method according to any one of claims 1 to 12 or the steps of the data drop method according to any one of claim 13 or 14 are implemented.
